# EUROPEAN PATENT SPECIFICATION

(11) **EP 1 875 660 B1**
(45) Date of publication and mention of the grant of the patent: **24.10.2018**
(21) Application number: 06757458.2
(22) Date of filing: 14.04.2006
(51) Int. Cl.: H04L 9/32

(54) **TAG GENERATION METHOD IN BROADCAST ENCRYPTION SYSTEM**
ETIKETTENERZEUGUNGSVERFAHREN IN EINEM AUSSTRAHLUNGS-VERSCHLÜSSELUNGSSYSTEM
PROCEDE DE GENERATION D'ETIQUETTES DANS UN SYSTEME DE CHIFFRAGE DE RADIODIFFUSION

(30) Priority: 05.12.2005 KR 20050117724; 19.04.2005 US 672550 P
(43) Date of publication of application: 09.01.2008
(60) Divisional application: 12005038.0
(73) Proprietor: Samsung Electronics Co., Ltd., Suwon-si, Gyeonggi-do, 443-742 (KR)
(72) Inventor: JIN, Weon-il, 526-1903, Baekseol-maeul Apartment, Suwon-si, Gyeonggi-do 440-719 (KR); SUNG, Maeng-hee, Seoul 137-070 (KR); KIM, Dae-youb, Seoul 156-861 (KR); KIM, Hwan-joon, 153-102, Daelim Apartment, Seoul 133-775 (KR)
(74) Representative: Grünecker Patent- und Rechtsanwälte PartG mbB
(86) International application number: PCT/KR2006/001396
(87) International publication number: WO 2006/112635

(56) References cited:
- EP-A1- 1 307 000
- JP-A- 2001 186 119
- US-A1- 2002 133 701
- US-A1- 2002 147 906
- US-A1- 2003 142 826
- US-A1- 2003 217 265
- JHO N-S ET AL: "NEW BROADCAST ENCRYPTION SCHEME USING TREE-BASED CIRCLE", PROCEEDINGS OF THE 5TH. ACM WORKSHOP ON DIGITAL RIGHTS MANAGEMENT. DRM'05. ALEXANDRIA, VA, NOV.7, 2005; [PROCEEDINGS OF THE ACM WORKSHOP ON DIGITAL RIGHTS MANAGEMENT. (DRM)], NEW YORK, NY : ACM, US, 7 November 2005 (2005-11-07), pages 37-44, XP001503026, DOI: 10.1145/1102546.1102554 ISBN: 978-1-59593-230-3

## Description

The present invention relates to a tag generation in a broadcast encryption (BE) system. More particularly, the present invention relates to a tag generation method in a BE system for efficiently reducing a tag size.

The broadcast encryption (BE) enables a transmitter, that is, a broadcast center to effectively transmit information only to intended users among all users. The BE should be available effectively whenever a set of the intended users arbitrarily and dynamically changes. The most crucial property of the BE is to revoke or exclude an unintended device or user, for example, an illegal user or an expired user.

For doing so, each device stores a different key set assigned, and a service provider stores the whole key set of the all devices.

A BE system is suggested in various schemes. Generally, the BE system employs a layered node structure. Alternatively, the BE system may be implemented using a hierarchical hash-chain broadcast encryption scheme (HBES).

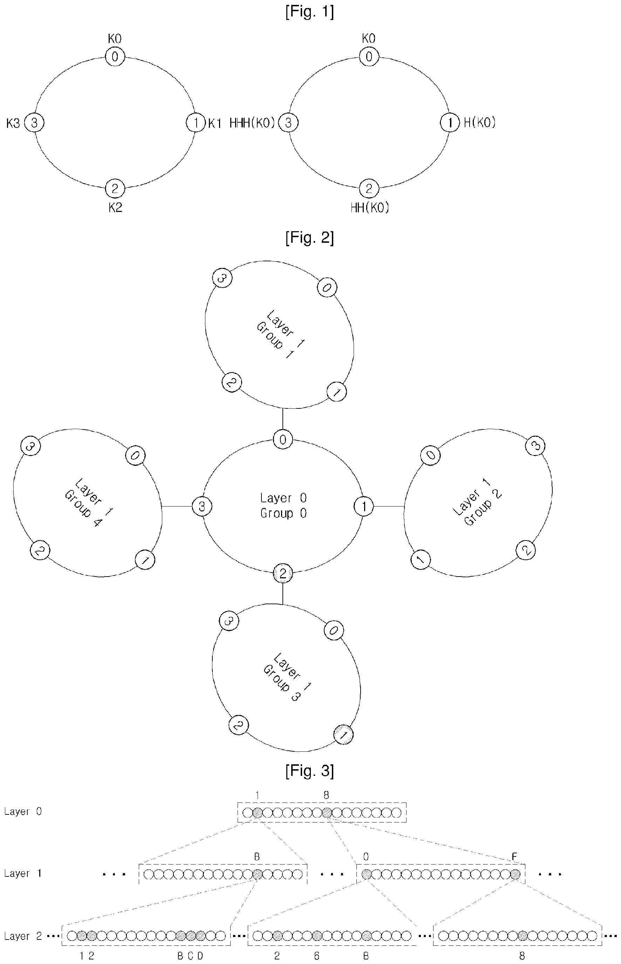

FIG. 1 depicts how to assign keys to nodes, respectively, in the BE system. Referring to FIG. 1, nodes 0 through 3 are arranged in a circle. The respective nodes 0 through 3 correspond to users in the BE system. Each node i is assigned a unique node key Ki. That is, the node key K0 is assigned to the node 0, the node key K1 is assigned to the node 1, the node key K2 is assigned to the node 2, and the node key K3 is assigned to the node 3.

To enable communications between authorized users alone, a certain key shared only by the authorized users should be assigned to the nodes of the circular structure. For doing this, the unique keys assigned to the nodes are consecutively applied to a one-way hash function to generate key values, that is, key sets. The generated key values are assigned to the nodes, respectively, in a manner as shown in Table 1.

**Table 1**

| | Node 0 | Node 1 | Node 2 | Node 3 |
|---|---|---|---|---|
| Key set | K0 | H (K0) | HH (K0) | HHH (K0) |
| | HHH (K1) | K1 | H (K1) | HH (K1) |
| | HH (K2) | HHH (K2) | K2 | H (K2) |
| | H (K3) | HH (K3) | HHH (K3) | K3 |

In Table 1, 'H' denotes the one-way hash function, and HH(K0) = H(H(K0)). Herein, the one-way hash function takes an input value of an arbitrary length and produces an output value of a fixed length. The one-way hash function has properties as follows. It is infeasible to find the input value using a given output value, and it is impossible to find another input value that produces the same output value as a given input value. In addition, it is impossible to find two different arbitrary input values that produce the same output value.

As mentioned above, the hash function is one of important functions applied for data integrity, authentication, repudiation prevention, and the like. The one-way hash function may be HBES SHA -1.

Referring back to FIG. 1, in case that only the nodes 0, 1 and 2 want to secure a safe communication channel, they use HH(KO) as an encryption key. In doing so, the nodes 0, 1 and 2 may store HH(KO) corresponding to the encryption key or easily compute HH(KO) using a stored value. However, the node 3 cannot compute HH(KO) corresponding to the encryption key, using its stored HHH(KO).

Herein, a node excluded from the encryption communication channel, such as the node 3, is referred to as a revoked node, and a node constructing the communication channel is referred to as a privileged node. The set of the nodes arranged in a circle is referred to as a node group.

Meanwhile, to handle a large number of nodes, it is required to layer the structure of FIG. 1.

FIG. 2 depicts a layered structure of the circular node groups of FIG. 1.

As shown in FIG. 2, two layers of a layer 0 and a layer 1 are shown, and a node group at each layer consists of 4 nodes. The respective nodes are assigned the key values or key sets generated using the hash function in a manner as shown in Table 1. The nodes at the lowest layer 1 are leaf nodes.

Note that the nodes at the lower layer hold keys assigned to their parent nodes at the upper layer in the layered structure of FIG. 2. In addition, when a node is revoked from the communication channel, the parent node of the revoked node is also regarded as the revoked node.

Specifically, the node 3 of the node group 1 stores its assigned key set and the key set of the node 0 in the node group 0. If the node 1 of the node group 3 is revoked, the node 2 of the node group 0 is also regarded as the revoked node.

At this time, the nodes 3, 0 and 1 of the node group 0 can secure the encryption communication channel by using HH(K03), which is generated from the encryption key of the node 3 of the node group 0 K03 (0 denotes the number of the node group and 3 denotes the serial number of the node), as the encryption key.

The privileged nodes in the node group 3 can also secure the encryption communication channel by using HH(K32) generated from K32 as the encryption key.

Accordingly, a server is able to transmit the encrypted information to all the nodes but the node 1 of the node group 3 using HH(K03) and HH(K32) as the encryption key.

That is, the server transmits to the leaf nodes a temporary key encrypted using the selected encryption key as aforementioned, and content encrypted with the temporary key.

Upon receiving the encrypted data packets from the server, the leaf nodes require information as to which one of its stored keys is used to generate the encryption key and to decrypt the data packet.

Hence, when transmitting the encryption key, the server appends a tag to the data packets so that the leaf nodes can acquire the information relating to the encryption key. The tag contains information relating to the revoked nodes.

Thus, the leaf nodes can learn the encryption key of the received data packets and thus generate the encryption key by means of the information relating to the revoked nodes.

A transmission overhead, a storage overhead, and a computation overhead are important in the BE. The transmission overhead is a quantity of the header transmitted from the transmitter, the storage overhead is a quantity of a secrete key stored by the user, and the computation overhead is a quantity of computation required for the user to acquire a session key. Among them, how to reduce the transmission overhead is of great concern. Therefore, it is required to reduce the transmission overhead according to the tag transmission.

US 2003/217265 A1 relates to an authentication system that uses public key encryption and comprises a revocation list generation apparatus that issues and distributes a public key revocation list that specifies the public key certificate issued by a public key certificate issuing apparatus; a revocation list usage apparatus that receives the public key certificate and the public key certificate revocation list and judges whether the public key certificate is registered in the public key certificate revocation list. The revocation list generation apparatus constructs and stores a tree structure composed of a plurality of levels and allocates unique values that identify a public key certificate of a different one of the terminals respectively to the leaves in the tree structure. When at least one descendant, which is a leaf, of a particular node in the stored tree corresponds to a unique value of a public key certificate to be revoked, the node is made a revoked node and a node revocation pattern is assigned to the node that has at least one revoked child node. The node revocation pattern is generated by concatenating identifiers that each identify whether a different one of the child nodes is respectively revoked or not. A list is then generated in which all node revocation patterns in the tree structure are arranged based on a predetermined rule that traces all nodes in the tree structure.

It is the object of the present invention to provide an improved tag generation method for generating tags used in a broadcast encryption system.

This object is solved by the subject matter of the independent claims.

Preferred embodiments are defined by the dependent claims.

According to an aspect of the present invention, there is provided a tag generation method in a BE system which takes advantage of efficient generation of a node ID of a revoked leaf node to reduce a tag size.

In accordance with the above aspect of the present invention, a tag generation method in a broadcast encryption (BE) system of a layered structure which includes a plurality of node groups each consisting of nodes in a certain number, includes (a) detecting at least one revoked leaf node; (b) setting a node identification (ID) assigned to at least one node to which the at least one revoked leaf node is subordinate, among nodes assigned node IDs at a layer 0, to a node path ID (NPID) of the at least one revoked leaf node at the layer 0; (c) generating a tag list in the layer 0 by combination the at least one NPID in order of increment of node IDs of the corresponding leaf nodes; and (d) generating a tag list in a lowest layer by repeatedly performing the setting and generation operation down to the lowest layer.

The NPID may be combined with a group ID (GID) indicative of information as to a parent node of a node corresponding to the NPID.

A first NPID at each layer may be combined with a GID

In the same node group as a previous NPID, a NPID from a second NPID at each layer may be combined with the same GID as combined with the previous NPID.

In a different node group from a previous NPID, a NPID from a second NPID at each layer may be combined with a GID which is a remainder after adding 1 to the previous NPID and dividing by 2.

The NPID may be combined with a GID of a parent node of a node corresponding to the NPID.

The node ID may be assigned as a hexadecimal, and the node group includes 16 nodes.

The lowest layer may be a layer 15.

When all leaf nodes along lower branches from a certain node in a tree topology are revoked, an NPID of the revoked leaf nodes may be substituted by a smallest NPID of the NPIDs.

The smallest NPID used for the substitution may be combined with a binary GID where '1' as many as a certain number are consecutively arranged.

The certain number may be a log of a number of nodes in a node group including a node corresponding to the NPID to a base 2.

A combination of NPIDs at each layer with respect to the at least one leaf node may be a node ID of the at least one leaf node.

### Advantageous Effects

According to the present invention, the transmission overhead at the server in the BE system is greatly reduced owing to the reduced tag size.

### Brief Description of the Drawings

FIG. 1 is a diagram illustrating assigning keys to nodes in a BE system.
FIG. 2 is a diagram illustrating a layered structure of circular node groups of FIG. 1;
FIG. 3 is a diagram illustrating a layered structure adopting a tag generation method according to an embodiment of the present invention;
FIG. 4 is a diagram illustrating the revocation of all leaf nodes subordinate to a node at a certain layer according to an embodiment of the present invention; and
FIG. 5 is a graph illustrating the tag size according to the tag generation method of the present invention.

### Best Mode for Carrying Out the Invention

Certain exemplary embodiments of the present invention will now be described in greater detail with reference to the accompanying drawings.

FIG. 3 depicts a layered structure adopting a tag generation method according to an embodiment of the present invention.

FIG. 3 shows that the layered structure consists of three layers 0, 1 and 2 by way of example. Note that each node group in FIG. 3 may be a circular node group as shown in FIG. 2. To ease the understanding, the circular formation is not illustrated in the drawings.

Referring now to FIG. 3, the layer 0 includes a node group consisting of 16 nodes. The layer 1 has a child node group built up with node groups each consisting of 16 nodes for the respective 16 nodes at the layer The node groups are subordinate to the 16 nodes of the layer 0, respectively. In other words, there are 16 node groups each consisting of the 16 nodes at the layer 1, and accordingly, 16² nodes are present in total.

At the layer 2, a child node group includes node groups each consisting of 16 nodes for the respective 16² nodes at the layer 1. In other words, since there are 16² node groups each consisting of the 16 nodes are present at the layer 2, 16³ nodes are present in total. Herein, the 16³ nodes at the lowest layer 2 are referred to as leaf nodes.

In the embodiment of the present invention, the layered structure may include 16 layers of layers 0 through 15. In this case, the layer 15 has a child node group built up with node groups each consisting of 16 nodes for the respective 16¹⁵ nodes at the layer 14. That is, there are 16¹⁵ node groups each consisting of 16 nodes at the layer 15, and accordingly, 16¹⁶ nodes, that is, 16¹⁶ leaf nodes are present in total.

Hereafter, how to determine a node identification (ID) of a leaf node is described in detail.

In the embodiment of the present invention, hexadecimals from 0 to F are assigned to the nodes in each node group of FIG. 3 according to an order, as their serial numbers. Provided that the number of nodes in each node group is N, the serial numbers from 0 to N-1 are assigned to the nodes in each node group.

In FIG. 3, according to the tag generation method of the present invention, the node ID of the leaf node is a consecutive arrangement of the serial numbers assigned to the nodes, to which the leaf node is subordinate, at the layers 0 through 15. Hereafter, the serial number at each layer is referred to as a node path ID (NPID) at each layer with respect to the corresponding leaf node. In conclusion, the arrangement of the NPIDs at the layers is the node ID of the corresponding leaf node.

Table 2 shows the determination of the node ID of the leaf node according to the tag generation method of the present invention.

**Table 2**

| | i | ii | iii | iv | v | vi | vii | viii | ix |
|---|---|---|---|---|---|---|---|---|---|
| Layer 0 | 1 | 1 | 1 | 1 | 1 | 8 | 8 | 8 | 8 |
| Layer 1 | B | B | B | B | B | 0 | 0 | 0 | F |
| Layer 2 | 1 | 2 | B | C | D | 2 | 6 | B | 8 |

Still referring to FIG. 3, the leaf node indicated by solid circle at the layer 2 denotes the leaf node revoked. Provided that 9 nodes are revoked in total, the node ID of each revoked leaf node is created according to the following scheme.
- Priority 1 : the order from the upper layer to the lower layer.
- Priority 2 : at the same layer, the smaller NPID assigned to the parent node.
- Priority 3 : in the same node group, the smaller NPID of the corresponding node group.

According to the priorities, in case of the node ID of the revoked leaf node i, a NPID '1' is assigned to its parent node at the layer 0 being the highest layer. '1' becomes the NPID of the revoked leaf node i at the layer Next, the NPID 'B' is assigned to the parent node of the node i, at the layer 1. 'B' becomes the NPID of the revoked leaf node i at the layer 1. Lastly, the NPID '1' is assigned to the revoked leaf node i at the layer 2. '1' becomes the NPID of the revoked leaf node i at the layer 2. As such, the node ID of the revoked leaf node determined to [1, B, 1].

As for the node ID of the revoked leaf node vi, the parent node of the node vi, at the layer 0 being the highest layer, is assigned a NPID '8'. '8' becomes the NPID of the revoked leaf node vi at the layer Next, the parent node of the node vi, at the layer 1, is assigned a NPID '0'. '0' becomes the NPID of the revoked leaf node vi at the layer 1. Lastly, an NPID '2' is assigned to the revoked leaf node vi at the layer 2. '2' becomes the NPID of the revoked leaf node vi at the layer 2. As such, the node ID of the revoked leaf node vi is determined to [8, 0, 2].

Table 3 shows the rearrangement in the line writing direction of the determined node IDs of the revoked leaf nodes of Table 2.

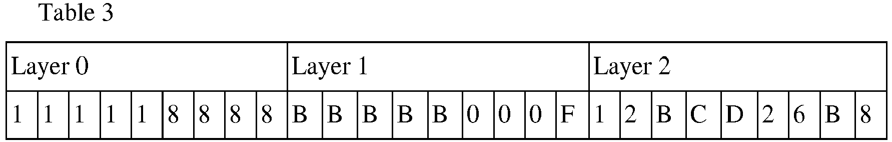

However, in practice, when transmitting the tag information to the leaf node, a group ID (GID) is appended to the NPID. Table 4 shows the combination of the GID according to an embodiment of the present invention.

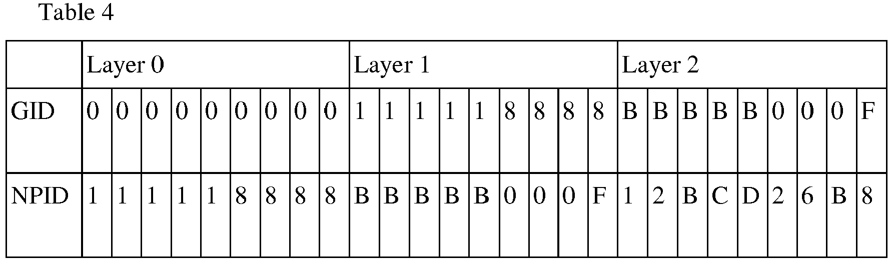

In Table 4, the GID combined to the NPID at each layer becomes the NPID of the parent node of the node at each layer corresponding to the revoked leaf node. Note that the GID at the layer 0 is '0' because the node corresponding to the revoked leaf node, at the layer 0, has no parent node.

That is, the NPID is combined with the GID that is the NPID of the parent node of the node corresponding to the NPID.

Table 5 shows tag tables transmitted to the leaf nodes when the GIDs are combined as shown in Table 4.

**Table 5**

| | | | | | | | | | | |
|---|---|---|---|---|---|---|---|---|---|---|
| Tag table | 01 | 01 | 01 | 01 | 01 | 08 | 08 | 08 | 08 | Layer 0 |
| | 1B | 1B | 1B | 1B | 1B | 80 | 80 | 80 | 8F | Layer 1 |
| | B1 | B2 | BB | BC | BD | 02 | 06 | 0B | F8 | Layer 2 |

Table 6 shows the combination of the GID according to an alternative embodiment of the present invention.

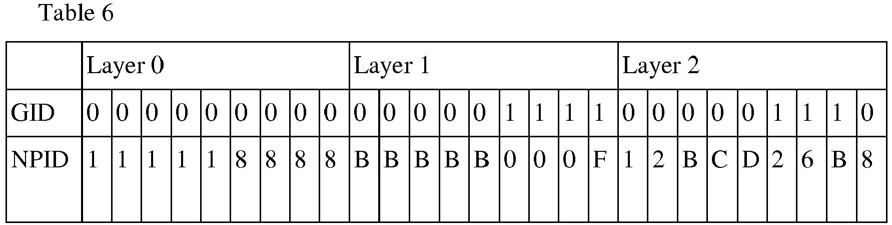

In Table 6, the first NPID at each layer is combined with the GID '0'. The NPID from the second NPID at each layer is combined with the same GID as the GID of the previous NPID within the same node group as the previous NPID.

By contrast, in the different node group from the previous NPID, the NPID after the second NPID at each layer is combined with the GID that is the remainder after adding '1' to the previous NPID and dividing it by '2'. More specifically, in case that the NPID from the second NPID at each layer is in the different node group from the previous NPID, the previous GID '1' becomes '0' and the previous GID '0' becomes '1'.

Table 7 shows tag tables transmitted to the respective leaf nodes according to the GID combination method as shown in Table 6.

**Table 7**

| | | | | | | | | | | |
|---|---|---|---|---|---|---|---|---|---|---|
| Tag table | 01 | 01 | 01 | 01 | 01 | 08 | 08 | 08 | 08 | Layer 0 |
| | 0B | 0B | 0B | 0B | 0B | 10 | 10 | 10 | IF | Layer 1 |
| | 01 | 02 | 0B | 0C | 0D | 12 | 16 | 1B | 08 | Layer 2 |

In the embodiment of the present invention, it can be assumed that all leaf nodes subordinate to a node at the specific layer are fully revoked.

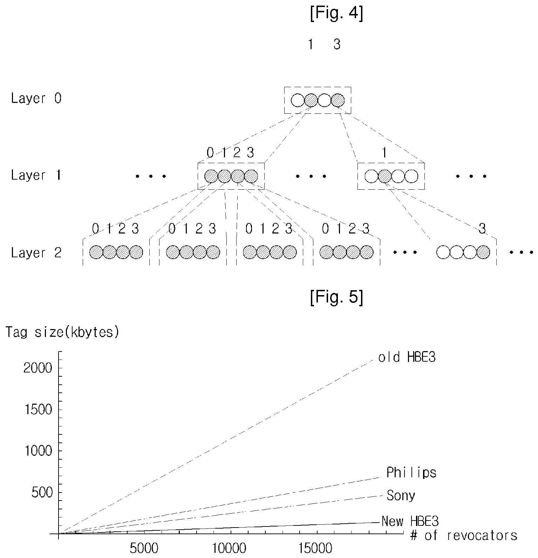

FIG. 4 depicts the full revocation of all leaf nodes subordinate to a node at the specific layer according to an embodiment of the present invention.

In FIG. 4, the layered structure consists of three layers 0, 1 and 2 by way of example. As shown in FIG. 4, the layer 0 includes a node group consisting of 4 nodes. The layer 1 has a child node group built up with node groups each consisting of 4 nodes for the 4 nodes at the layer 0, respectively. In other words, since there are 4 node groups each consisting of the 4 nodes at the layer 1, 4² nodes are present in total.

At the layer 2, a child node group is built up with node groups each consisting of 4 nodes for the 4² nodes at the layer 1, respectively. In other words, since there are 4² node groups each consisting of the 4 nodes at the layer 2, 4³ nodes are present in total. Herein, the 4³ nodes at the lowest layer 2 are referred to as leaf nodes.

In the embodiment of the present invention, the layered structure may include 16 layers of layers 0 through 15. Accordingly, there would be 16 nodes in each node group. In this case, the layer 15 has a child node group built up with node groups each consisting of 16 nodes for the respective 16¹⁵ nodes at the layer 14. That is, there are 16 ¹⁵ node groups each consisting of 16 nodes at the layer 15, and accordingly, 16¹⁶ nodes, that is, 16¹⁶ leaf nodes are present in total.

Still referring to FIG. 4, as one can see, all leaf nodes subordinate to the second node in the node group at the layer 0 are revoked, and one of leaf nodes subordinate to the fourth node in the node group at the layer 0 is revoked.

Table 8 shows the node ID of the revoked leaf nodes in accordance with Table 2.

**Table 8**

| Leaf node | a | b | c | d | e | f | g | h | i | J | k | l | m | n | o | p | q |
|---|---|---|---|---|---|---|---|---|---|---|---|---|---|---|---|---|---|
| Layer 0 | 1 | 1 | 1 | 1 | 1 | 1 | 1 | 1 | 1 | 1 | 1 | 1 | 1 | 1 | 1 | 1 | 3 |
| Layer 1 | 0 | 0 | 0 | 0 | 1 | 1 | 1 | 1 | 2 | 2 | 2 | 2 | 3 | 3 | 3 | 3 | 1 |
| Layer 2 | 0 | 1 | 2 | 3 | 0 | 1 | 2 | 3 | 0 | 1 | 2 | 3 | 0 | 1 | 2 | 3 | 3 |

In reference to FIG. 4 and Table 8, the parent nodes of the revoked nodes are in the same group at the layer 1. These parent nodes at the layer 1 have the common parent node at the layer

In the embodiment of the present invention, the node IDs of the revoked leaf nodes a through p is substituted by the ID of the revoked leaf node a. The substituted node IDs are shown in Table 9.

**Table 9**

| Leaf node | a ∼ p | q |
|---|---|---|
| Layer 0 | 1 | 3 |
| Layer 1 | 0 | 1 |
| Layer 2 | 0 | 3 |

In event that all leaf nodes subordinate to lower branches from a specific node are revoked in the layered structure, the NPID of the revoked leaf nodes is substituted by the smallest NPID among the NPIDs of the revoked leaf nodes at the respective layers.

Table 10 show the GID combination method in FIG. 4.

**Table 10**

| | Layer 0 | | Layer 1 | | Layer 2 | |
|---|---|---|---|---|---|---|
| GID | 0 | 0 | 1111(2) | 0 | 1111(2) | 0 |
| NPID | 1 | 3 | 0 | 1 | 0 | 3 |

Referring to Tables 8, 9 and 10, the node ID [1, 0, 0] which substitutes the node IDs of the revoked leaf nodes a through p, (hereafter, referred to as a representative node ID) consists of the NPIDs [1], [0] and [0]. Among them, while the NPID [1] at the layer 0 was the duplicate NPID of the revoked leaf nodes a through p, the NPIDs [0 ] and [0] at the layers 1 and 2 substitute the NPIDs [0], [1], [2] and [3] of the leaf nodes a through p at the layers 1 and 2, respectively.

Of the NPIDs constituting the representative node ID, the NPID [1] at the layer 0 has no substituting NPID. Thus, the duplication is not indicated. Instead, in the manner as shown in Table 6, the NPID [1] is combined with the GID '0' as the first NPID at the layer.

Of the NPIDs constituting the representative node ID, the NPIDs [0] and [0] at the layers 1 and 2, respectively, substitute the NPIDs [0], [1], [2] and [3] of the leaf nodes a through p. To represent this substitution, a binary GID in which '1' as many as a certain number are consecutively arranged, for example, 11,...11₍₂₎, is combined.

In the embodiment of the present invention, the cipher of the GID may be determined according to the number of types of the substituted NPIDs. When four types of the NPIDs are substituted as shown in FIG. 4, the GID is 11₍₂₎. Provided that the node group consists of 16 nodes in FIG. 4, the GID is 1111₍₂₎.

It can be said that the cipher of the GID is (log₂t) wherein t is the number of nodes in the node group to which the node corresponding to the NPID of the representative node ID belongs.

In Table 10, aside from the NPIDs constituting the representative node ID, the GID of other NPID is determined as shown in Table 6.

Specifically, within the same node group as the previous NPID, the NPID at the layer is combined with the same GID as combined to the previous NPID.

By contrast, in the different node group from the previous NPID, the NPID from the NPID at the layer is combined with the GID that is the remainder after adding '1' to the previous NPID and dividing it by '2'.

Table 11 shows tag tables transmitted to the leaf nodes when the GID is combined in the manner as shown in Table 10.

**Table 11**

| | | | |
|---|---|---|---|
| Tag table | 01 | 03 | Layer 0 |
| | 11(2)0 | 01 | Layer 1 |
| | 11(2)0 | 03 | Layer 2 |

FIG. 5 is a graph comparing the tag size between the tag generation method according to an embodiment of the present invention and the conventional tag generation method as disclosed in U.S. Patent Application No. 20020147906.

As shown in FIG. 5, it is apparent that the tag size 100 of the present invention is much smaller than the tag size 200 of the above literature. In case that only one leaf node is revoked, the present invention can reduce the tag size by 65 times than the above literature. In case of 16 revoked leaf nodes, the present invention can reduce the tag size by 61 times than the above literature.

In addition, as for 256 revoked leaf nodes, the tag size is reduced by 57 times, and as for 65,536 revoked leaf nodes, the tag size is reduced by 49 times. As for 4.2 billion revoked leaf nodes, the tag size is reduced by about 32 times.

Although a few embodiments of the present invention have been shown and described, it would be appreciated by those skilled in the art that changes may be made in these embodiments without departing from the principles of the invention, the scope of which is defined in the claims and their equivalents.

## Claims

1. A tag generation method for use in a broadcast encryption, BE, system of a layered structure which includes a plurality of node groups each consisting of a predetermined number of nodes, the method comprising:
detecting at least one revoked leaf node;
setting a node identification, ID, assigned to at least one node to which the at least one revoked leaf node is subordinate, among nodes assigned node IDs at a layer 0, to a node path ID, NPID, of the at least one revoked leaf node at the layer 0;
generating a tag list in the layer 0 by combination the at least one NPID in order of increment of node IDs of the corresponding leaf nodes; and
generating a tag list in layers below the layer 0 by repeatedly performing the setting and generation operation for each layer below the layer 0 down to the layer comprising leaf nodes.

2. The tag generation method of claim 1, wherein each NPID is combined with a group ID, GID, indicative of information as to a parent node of a node corresponding to the NPID.

3. The tag generation method of claim 2, wherein a first NPID at each layer is combined with a GID 0.

4. The tag generation method of claim 3, wherein, in the same node group as a previous NPID, a NPID from a second NPID at each layer is combined with the same GID as combined with the previous NPID.

5. The tag generation method of claim 3, wherein, in a different node group from a previous NPID, a NPID from a second NPID at each layer is combined with a GID which is a remainder after adding 1 to the previous NPID and dividing by 2.

6. The tag generation method of claim 1, wherein the NPID is combined with a GID of a parent node of a node corresponding to the NPID.

7. The tag generation method of claim 1, wherein the node ID is assigned as a hexadecimal, and the node group includes 16 nodes.

8. The tag generation method of claim 1, wherein the lowest layer is a layer 15.

9. The tag generation method of claim 2, wherein, when all leaf nodes along lower branches from the one revoked leaf node node in a tree topology are revoked, an NPID of the revoked leaf nodes is substituted by a smallest NPID of the NPIDs.

10. The tag generation method of claim 9, wherein the smallest NPID used for the substitution is combined with a binary GID where '1s' as many as a defined number are consecutively arranged.

11. The tag generation method of claim 10, wherein the defined number is a log of a number of nodes in a node group including a node corresponding to the NPID to a base 2.

12. The tag generation method of claim 1, wherein a combination of NPIDs at each layer with respect to the at least one leaf node is a node ID of the at least one leaf node.

## Patentansprüche

1. Tag-Erzeugungsverfahren für die Verwendung in einem Broadcast-Verschlüsselungssystem (Broadcast Encryption bzw. BE-System) einer geschichteten Struktur, die eine Vielzahl von Knotengruppen enthält, die jeweils aus einer vorbestimmten Anzahl von Knoten bestehen, wobei das Verfahren umfasst:
Erfassen wenigstens eines widerrufenen Blattknotens,
Setzen einer Knotenidentifikation (Knoten-ID), die wenigstens einem Knoten zugewiesen ist, dem der wenigstens eine widerrufene Blattknoten untergeordnet ist, innerhalb der Knoten, denen Knoten-IDs in einer Schicht 0 zugewiesen sind, zu einer Knotenpfad-ID (Node Path ID bzw. NPID) des wenigstens einen widerrufenen Blattknotens in der Schicht 0,
Erzeugen einer Tag-Liste in der Schicht 0 durch eine Kombination der wenigstens einen NPID in der Inkrementierreihenfolge von Knoten-IDs der entsprechenden Blattknoten, und
Erzeugen einer Tag-Liste in Schichten unter der Schicht 0 durch das wiederholte Durchführen der Setz- und Erzeugungsoperation für jede Schicht unter der Schicht 0 nach unten zu der Blattknoten enthaltenden Schicht.

2. Tag-Erzeugungsverfahren nach Anspruch 1, wobei jede NPID mit einer Gruppen-ID (GID) kombiniert ist, die Informationen zu einem Elterknoten eines Knotens in Entsprechung zu der NPID angibt.

3. Tag-Erzeugungsverfahren nach Anspruch 2, wobei eine erste NPID in jeder Schicht mit einer GID 0 kombiniert wird.

4. Tag-Erzeugungsverfahren nach Anspruch 3, wobei in der gleichen Knotengruppe wie einer vorausgehenden NPID eine NPID von einer zweiten NPID in jeder Schicht mit der gleichen GID kombiniert wird wie sie mit der vorausgehenden NPID kombiniert wird.

5. Tag-Erzeugungsverfahren nach Anspruch 3, wobei in einer anderen Knotengruppe als der vorausgehenden NPID eine NPID von einer zweiten NPID in jeder Schicht mit einer GID kombiniert wird, die ein Rest nach dem Addieren von 1 zu der vorausgehenden NPID und dem Dividieren durch 2 ist.

6. Tag-Erzeugungsverfahren nach Anspruch 1, wobei die NPID mit einer GID eines Elterknotens eines Knotens in Entsprechung zu der NPID kombiniert wird.

7. Tag-Erzeugungsverfahren nach Anspruch 1, wobei der Knoten-ID als eine Hexadezimalzahl zugewiesen wird und die Knotengruppe 16 Knoten enthält.

8. Tag-Erzeugungsverfahren nach Anspruch 1, wobei die niedrigste Schicht eine Schicht 15 ist.

9. Tag-Erzeugungsverfahren nach Anspruch 2, wobei, wenn alle Blattknoten entlang von niedrigeren Zweigen von dem einen widerrufenen Blattknoten in einer Baumtopologie widerrufen werden, eine NPID der widerrufenen Blattknoten durch eine kleinste NPID der NPIDs ersetzt wird.

10. Tag-Erzeugungsverfahren nach Anspruch 9, wobei die kleinste NPID, die für die Ersetzung verwendet wird, mit einer binären GID kombiniert wird, wobei eine Anzahl von Einsen (,1') in Entsprechung zu einer definierten Zahl aufeinanderfolgend angeordnet sind.

11. Tag-Erzeugungsverfahren nach Anspruch 10, wobei die definierte Zahl ein Logarithmus einer Anzahl von Knoten in einer Knotengruppe einschließlich eines Knotens in Entsprechung zu der NPID zu einer Basis 2 ist.

12. Tag-Erzeugungsverfahren nach Anspruch 1, wobei eine Kombination von NPIDs in jeder Schicht in Bezug auf den wenigstens einen Blattknoten eine Knoten-ID des wenigstens einen Blattknotens ist.

## Revendications

1. Procédé de génération d'étiquettes pour utilisation dans un système de chiffrage de radiodiffusion, BE, d'une structure en couches qui comprend une pluralité de groupes de noeuds constitués chacun d'un nombre prédéterminé de noeuds, le procédé comprenant les étapes suivantes:
détecter au moins un noeud feuille révoqué;
établir une identification de noeud, ID, affectée à au moins un noeud auquel le noeud feuille révoqué est subordonné, parmi des noeuds affectés à des ID de noeud à une couche 0, à une ID de chemin de noeud, NPID, dudit au moins un noeud feuille révoqué à la couche 0;
générer une liste d'étiquettes dans la couche 0 par combinaison d'au moins une NPID dans l'ordre d'incrément des ID de noeud des noeuds feuilles correspondants; et
générer une liste d'étiquettes en couches au-dessous de la couche 0 en effectuant de manière répétée l'opération de réglage et de génération pour chaque couche en dessous de la couche 0 jusqu'à la couche comprenant des noeuds feuilles.

2. Procédé de génération d'étiquettes selon la revendication 1, dans lequel chaque NPID est combinée avec une ID de groupe, GID, indiquant des informations relatives à un noeud parent d'un noeud correspondant à la NPID.

3. Procédé de génération d'étiquettes selon la revendication 2, dans lequel une première NPID à chaque couche est combinée avec une GID 0.

4. Procédé de génération d'étiquettes selon la revendication 3, dans lequel, dans le même groupe de noeuds qu'une NPID précédente, une NPID provenant d'une seconde NPID à chaque couche est combinée avec la même GID qu'elle était combinée avec le NPID précédente.

5. Procédé de génération d'étiquettes selon la revendication 3, dans lequel, dans un groupe de noeuds différent d'une NPID précédente, une NPID provenant d'une second NPID à chaque couche est combinée avec un GID qui est un résidu après avoir ajouté 1 à la NPID précédente et après avoir divisé par 2.

6. Procédé de génération d'étiquettes selon la revendication 1, dans lequel la NPID est combinée avec une GID d'un noeud parent d'un noeud correspondant à la NPID.

7. Procédé de génération d'étiquettes selon la revendication 1, dans l'ID de noeud est attribuée comme hexadécimale et le groupe de noeuds comprend 16 noeuds.

8. Procédé de génération d'étiquettes selon la revendication 1, dans lequel la couche la plus basse est une couche 15.

9. Procédé de génération d'étiquettes selon la revendication 2, dans lequel, lorsque tous les noeuds feuilles parmi les branches inférieures provenant du noeud feuille révoqué dans une arborescence sont révoqués, une NPID des noeuds feuilles révoqués est remplacée par la plus petite NPID des NPID.

10. Procédé de génération d'étiquettes selon la revendication 9, dans lequel la plus petite NPID utilisée pour la substitution est combinée à une GID binaire contenant une quantité consécutive de «1» correspondant à un nombre défini.

11. Procédé de génération d'étiquettes selon la revendication 10, dans lequel le nombre défini est un journal d'un nombre de noeuds dans un groupe de noeuds comprenant un noeud correspondant à la NPID en base 2.

12. Procédé de génération d'étiquettes selon la revendication 1, dans lequel une combinaison de NPID à chaque couche par rapport à au moins un noeud feuille est une ID de noeud dudit au moins un noeud feuille.
